# EUROPEAN PATENT APPLICATION

(11) **EP 4 293 459 A1**
(43) Date of publication of application: **20.12.2023**
(21) Application number: 22790787.0
(22) Date of filing: 24.03.2022
(51) Int. Cl.: G05D 1/02

(54) **INTELLIGENT MOWING SYSTEM AND INTELLIGENT MOWING DEVICE**

(30) Priority: 23.04.2021 CN 202110439799; 23.04.2021 CN 202110439805; 27.04.2021 CN 202110457244
(71) Applicant: Nanjing Chervon Industry Co., Ltd., Nanjing, Jiangsu 211106 (CN)
(72) Inventor: CHEN, Si, Nanjing, Jiangsu 211106 (CN); LI, Donghai, Nanjing, Jiangsu 211106 (CN); YANG, Dezhong, Nanjing, Jiangsu 211106 (CN)
(74) Representative: Sun, Yiming
(86) International application number: PCT/CN2022/082681
(87) International publication number: WO 2022/222678

(57) **Abstract**

Provided are an intelligent mowing system and an intelligent mowing device. The system includes a working region defined by a first boundary line, a non-working region defined by a second boundary line, and an intelligent mowing device. The system further includes: a control module configured to control the intelligent mowing device to walk in the working region, on the first boundary line, or on the second boundary line; a positioning module configured to position position information of the intelligent mowing device; and a data acquisition module configured to acquire regional data about a preset range from a current position of the intelligent mowing device, where the preset range is greater than or equal to zero. The control module is configured to: acquire the regional data of the intelligent mowing device when the intelligent mowing device works in a boundary walk mode in which a walk along the first boundary line or the second boundary line is performed; and control, according to the relationship between the regional data and a data threshold, the intelligent mowing device to walk along the first boundary line.

## Description

This application claims priority to Chinese Patent Application No. 202110439799.4 filed with the China National Intellectual Property Administration (CNIPA) on Apr. 23, 2021, Chinese Patent Application No. 202110439805.6 filed with the CNIPA on Apr. 23, 2021, and Chinese Patent Application No. 202110457244.2 filed with the CNIPA on Apr. 27, 2021, the disclosures of which are incorporated herein by reference in their entireties.

### TECHNICAL FIELD

The present application relates to the field of power tools, for example, an intelligent mowing system and an intelligent mowing device.

### BACKGROUND

With the development of mobile robot technology, more and more robots have entered people's daily life in recent years. Like sweeping robots, intelligent mowing device robots which can automatically mow grass, be autonomously recharged, and autonomously avoid obstacles in users' lawns also gradually become popular. The intelligent mowing device robots can liberate the users from heavy and boring housework such as cleaning and maintaining the lawns and are more and more favored by the users.

Typically, there are some fixed obstacles, for example, trees, ponds, or flower beds, in a working region of an intelligent mowing device. If the intelligent mowing device collides with the obstacles frequently, the preceding obstacles may be damaged or the mower itself may malfunction. To avoid this case, generally, a boundary line is arranged around an obstacle, which may be referred to as an island line. When the mowing device identifies the boundary line with its own sensor, the mowing device will not continue moving forward so that the collision with the obstacle can be avoided. However, since the island line and a boundary line constituting the working region of the mower are generally the same line, the intelligent mowing device cannot distinguish the island line from the boundary line of the working region with a boundary signal sensor. Thus, when the mower needs to walk along the boundary line of the working region to achieve some object, it may walk along the island line. Additionally, the island line, like a closed circle, does not have visible start and stop points. Therefore, if walking along the island line, the mower will not be able to walk out of an island until power is exhausted.

### SUMMARY

The present application provides an intelligent mowing device capable of accurately walking on a boundary line of a working region.

The present application adopts the technical solutions described below.

An intelligent mowing system includes a working region defined by a first boundary line, a non-working region defined by a second boundary line, and an intelligent mowing device. The intelligent mowing system further includes: a control module configured to control the intelligent mowing device to walk in the working region, on the first boundary line, or on the second boundary line; a positioning module configured to position position information of the intelligent mowing device; and a data acquisition module configured to acquire regional data about a preset range from a current position of the intelligent mowing device, where the preset range is greater than or equal to zero. The control module is configured to: acquire the regional data of the intelligent mowing device when the intelligent mowing device works in a boundary walk mode in which a walk along the first boundary line or the second boundary line is performed; and control, according to the relationship between the regional data and a data threshold, the intelligent mowing device to walk along the first boundary line.

In some examples, the intelligent mowing system further includes a boundary line identification module configured to identify the first boundary line or the second boundary line, where the control module is configured to control the intelligent mowing device to move to the first boundary line or the second boundary line so as to cause the intelligent mowing device to enter the boundary walk mode.

In some examples, the control module is configured to: control the intelligent mowing device to be along the first boundary line when the regional data is in a data threshold range; and control the intelligent mowing device to travel out of the second boundary line for a distance when the regional data exceeds the data threshold range; and the boundary line identification module identifies the first boundary line or the second boundary line after the intelligent mowing device travels out of the second boundary line for the distance so that the control module controls, according to an identification result, the mowing device to enter the boundary walk mode.

In some examples, the working region is a closed region which is formed by the intelligent mowing device by walking along the first boundary line and mowing grass with a mowing radius.

In some examples, the data acquisition module is configured to record boundary position information of the intelligent mowing device walking along the first boundary line or the second boundary line when the intelligent mowing device works in the boundary walk mode; and the control module is configured to: calculate the number of repetition times of the boundary position information at different moments; determine that the intelligent mowing device is walking along the second boundary line when the number of repetition times is greater than or equal to a threshold of the number of times; and control the intelligent mowing device to move from the second boundary line to the first boundary line and walk along the first boundary line.

In some examples, the control module is configured to: generate walk track data for any time period based on the boundary position information; calculate a data repetition degree of walk track data in two time periods which do not have the same moment; determine that the intelligent mowing device is walking along the second boundary line when the data repetition degree is higher than or equal to a repetition degree threshold; and control the intelligent mowing device to move from the second boundary line to the first boundary line and walk along the first boundary line.

In some examples, the intelligent mowing system further includes a storage module configured to store map grids including the working region and the first boundary line, where a map grid where the first boundary line is located is marked as a boundary line grid; the data acquisition module is configured to acquire a first map grid of a current position of the intelligent mowing device when the intelligent mowing device works in the boundary walk mode; and the control module is configured to: detect whether the first map grid is the boundary line grid; determine that the intelligent mowing device is walking along the second boundary line if the first map grid is not the boundary line grid or the number of first map grids confirmed as boundary line grids within a certain time period is less than or equal to a first number threshold; and control the intelligent mowing device to move from the second boundary line to the first boundary line and walk along the first boundary line.

In some examples, the data acquisition module is configured to acquire second map grids in the preset range from the current position of the intelligent mowing device when the intelligent mowing device works in the boundary walk mode; and the control module is configured to: detect a boundary line grid among the second map grids; determine that the intelligent mowing device is walking along the second boundary line if the number of boundary line grids among the second map grids is less than or equal to a second number threshold; and control the intelligent mowing device to move from the second boundary line to the first boundary line and walk along the first boundary line.

In some examples, the control module includes: a map acquisition unit configured to acquire a regional map of the working region; a data processing unit configured to identify a sub-working region and a region connection channel in the regional map and generate a topological structure of the regional map; and a control unit configured to control, according to the topological structure of the regional map, the intelligent mowing device to pass through the region connection channel to move and mow grass in a different sub-working region.

In some examples, the data processing unit includes: a region division subunit configured to identify the sub-working region and the region connection channel in the regional map; an entrance/exit extraction subunit configured to extract an entrance/exit node at the joint between the region connection channel and the sub-working region; a relationship extraction subunit recording the connection relationship between different entrance/exit nodes connected to the same sub-working region; and a topology generation subunit configured to generate the topological structure of the regional map based on the sub-working region, the region connection channel, and the connection relationship.

In some examples, the intelligent mowing device further includes a running detection module configured to acquire pose information of the intelligent mowing device during running; and the control unit is configured to: acquire the pose information; acquire the position information of the intelligent mowing device; determine, based on the pose information, whether a running direction of the intelligent mowing device is toward an entrance/exit when it is determined, according to the topological structure and the position information, that the intelligent mowing device is in the range of a certain distance from the entrance/exit; and control the intelligent mowing device to pass through the region connection channel along a boundary line to move in the different sub-working region when the intelligent mowing device runs toward the entrance/exit.

In some examples, the control unit is configured to: detect signal strength of the boundary line during the walk of the intelligent mowing device along the boundary line; control the intelligent mowing device to continue walking along the boundary line in a current walk direction to pass through the region connection channel when the signal strength is greater than a strength threshold; and control the intelligent mowing device to reverse a direction to walk along the boundary line along the direction opposite to a current running direction so as to pass through the region connection channel when the signal strength is less than the strength threshold.

In some examples, the control unit is configured to control, in the process where the intelligent mowing device passes through the region connection channel along the boundary line, the intelligent mowing device to steer to the middle position of the region connection channel for travel.

In some examples, the control unit is configured to: acquire signal strength on the left side of the intelligent mowing device and signal strength on the right side of the intelligent mowing device during the walk of the intelligent mowing device along the region connection channel; and control, according to the signal strength on the left side and the signal strength on the right side, the intelligent mowing device to travel at the middle position of the region connection channel so that the ratio of the signal strength on the left side to the signal strength on the right side is in a preset ratio range.

In some examples, the first boundary line and the second boundary line are the same line.

An intelligent mowing device includes: a control module configured to control the intelligent mowing device to walk in a working region defined by a first boundary line, on the first boundary line, or on a second boundary line, where the second boundary line defines a non-working region; a positioning module configured to position position information of the intelligent mowing device; and a data acquisition module configured to acquire regional data about a preset range from a current position of the intelligent mowing device, where the preset range is greater than or equal to zero. The control module is configured to: acquire the regional data of the intelligent mowing device when the intelligent mowing device works in a boundary walk mode in which a walk along the first boundary line or the second boundary line is performed; and control, according to the relationship between the regional data and a data threshold, the intelligent mowing device to walk along the first boundary line. The control module includes: a map acquisition unit configured to acquire a regional map of the working region; a data processing unit configured to identify a sub-working region and a region connection channel in the regional map and generate a topological structure of the regional map; and a control unit configured to control, according to the topological structure of the regional map, the intelligent mowing device to pass through the region connection channel to move and mow grass in a different sub-working region.

An intelligent mowing device includes: a control module configured to control the intelligent mowing device to walk in a working region defined by a first boundary line, on the first boundary line, or on a second boundary line, where the second boundary line defines a non-working region; a positioning module configured to position position information of the intelligent mowing device; a data acquisition module configured to acquire regional data about a preset range from a current position of the intelligent mowing device, where the preset range is greater than or equal to zero; and a boundary line identification module configured to identify the first boundary line or the second boundary line. The control module is configured to: control the intelligent mowing device to move to the first boundary line or the second boundary line so as to cause the intelligent mowing device to enter a boundary walk mode; acquire the regional data of the intelligent mowing device when the intelligent mowing device works in the boundary walk mode; and control, according to the relationship between the regional data and a data threshold, the intelligent mowing device to walk along the first boundary line.

In some examples, the control module is configured to: control the intelligent mowing device to be along the first boundary line when the regional data is in a data threshold range; and control the intelligent mowing device to travel out of the second boundary line for a distance when the regional data exceeds the data threshold range; and the boundary line identification module identifies the first boundary line or the second boundary line after the intelligent mowing device travels out of the second boundary line for the distance so that the control module controls, according to an identification result, the mowing device to enter the boundary walk mode.

In some examples, the data acquisition module is configured to record boundary position information of the intelligent mowing device walking along the first boundary line or the second boundary line when the intelligent mowing device works in the boundary walk mode; and the control module is configured to: calculate the number of repetition times of the boundary position information at different moments; determine that the intelligent mowing device is walking along the second boundary line when the number of repetition times is greater than or equal to a threshold of the number of times; and control the intelligent mowing device to move from the second boundary line to the first boundary line and walk along the first boundary line.

In some examples, the control module is configured to: generate walk track data for any time period based on the boundary position information; calculate a data repetition degree of walk track data in two time periods which do not have the same moment; determine that the intelligent mowing device is walking along the second boundary line when the data repetition degree is higher than or equal to a repetition degree threshold; and control the intelligent mowing device to move from the second boundary line to the first boundary line and walk along the first boundary line.

During a movement along the boundary line, an intelligent mower can acquire regional data about a current position of the mower or regional data about the periphery of the mower using positioning information. The type of a boundary line which the mower is along currently can be accurately determined according to the acquired regional data so that it is ensured that the mower is controlled to walk along the boundary line of a running region.

### BRIEF DESCRIPTION OF DRAWINGS

FIG. 1 is a schematic diagram of a working system of a self-moving device as an example;
FIG. 2 is a structural view of a self-moving device as an example;
FIG. 3 is a circuit block diagram of a self-moving device as an example;
FIG. 4 is a schematic diagram of a first boundary line as an example;
FIG. 5 is a flowchart of a method for controlling the movement of a self-moving device as an example;
FIG. 6 is a flowchart of a method for controlling the movement of a self-moving device as an example;
FIG. 7 is a schematic diagram of a working system of an intelligent mowing device as another example;
FIG. 8 is a circuit block diagram of an intelligent mowing device as another example;
FIG. 9 shows a grayscale image of a working region of an intelligent mowing device as another example;
FIG. 10 shows a grayscale image of sub-working regions of an intelligent mowing device as another example;
FIG. 11 shows a grayscale image of region connection channels of an intelligent mowing device as another example;
FIG. 12 is a diagram showing a topological structure of a working region of an intelligent mowing device as another example;
FIG. 13 is a schematic diagram showing the running of an intelligent mowing device as another example;
FIG. 14 is a flowchart of a method for controlling the movement of an intelligent mowing device as another example;

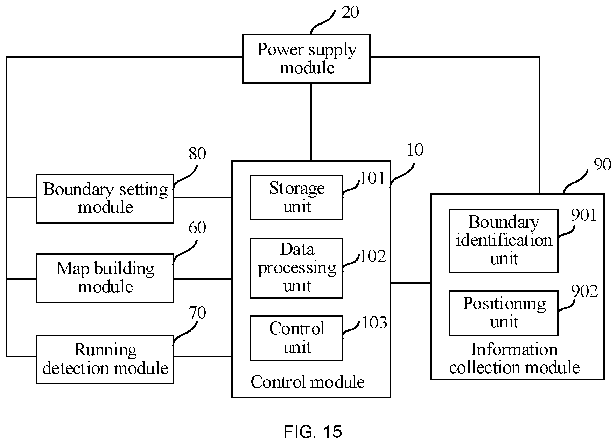

FIG. 15 is a circuit block diagram of an intelligent mowing device as another example;
FIG. 16 is a schematic diagram showing path planning as another example;
FIG. 17 is a schematic diagram showing the determination of a path condition as another example;
FIG. 18 is a flowchart of a method for controlling the movement of a self-moving device as another example;
FIG. 19 is a flowchart of a method for controlling the movement of a self-moving device as another example; and
FIG. 20 is a flowchart of a method for controlling the movement of a self-moving device as another example.

### DETAILED DESCRIPTION

The present application is described below in detail in conjunction with drawings and examples. It is to be understood that the examples described herein are intended to explain the present application and not to limit the present application. Additionally, it is to be noted that for ease of description, only part, not all, of structures related to the present application are illustrated in the drawings.

Technical solutions in the present application are applicable to devices suitable for being unattended such as automatic cleaning devices, automatic watering devices, and automatic snow throwers in addition to intelligent mowers. In addition, other types of self-moving devices which can adopt the substance of the technical solutions disclosed below may each fall within the scope of the present application. The present application is primarily directed to the intelligent mowers. It is to be understood that different functional accessories may be used for different self-moving devices, and the different functional accessories correspond to different action manners. In an intelligent mower of the present application, a functional accessory is a cutting blade for cutting vegetation.

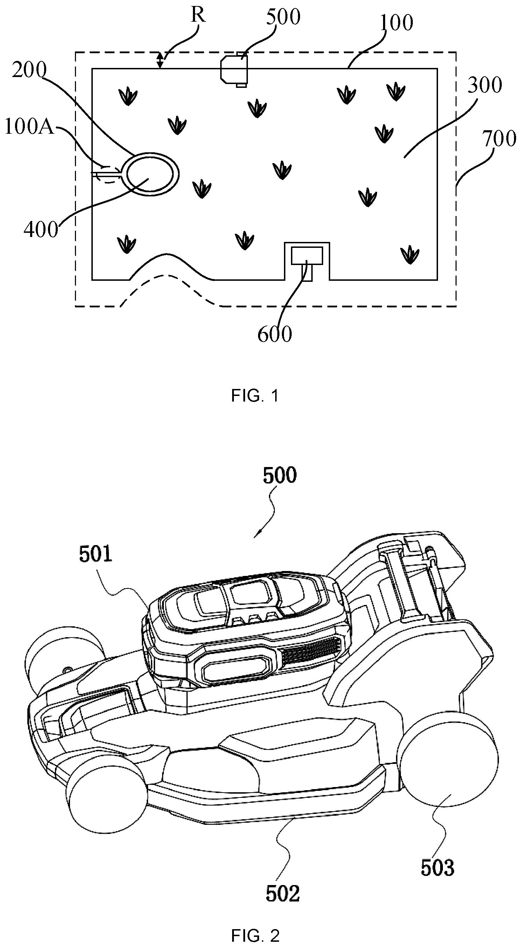

Referring to FIG. 1, a shown mowing system includes a first boundary line 100, a second boundary line 200, a working region 300, a non-working region 400, an intelligent mowing device 500, and a charging station 600. The charging station 600 is configured to be a place for parking an intelligent mower. For example, when the intelligent mower is short of power, the charging station 600 is configured to supplement the intelligent mower with energy. The charging station 300 is typically disposed on the first boundary line 100 or in the working region 300. The first boundary line 100 is used for defining the working region 300 of the mower. Typically, the first boundary line 100 is joined end to end to close the working region 300. In the present application, a working region may be an irregular closed pattern or a regular closed pattern. The second boundary line 200 is used for defining a non-working region. The shape of the non-working region is related to the size, shape, and the like of an obstacle in the non-working region.

In an example, the first boundary line 100 and the second boundary line 200 may be physical boundary lines. For example, a first boundary line may be a physical boundary line such as a twig fence, a fence, or a wall. Alternatively, a first boundary line may be a virtual boundary signal transmitted from a wire, a signal transmission device, or the like, such as an electromagnetic signal or an optical signal. In this example, the second boundary line 200 and the first boundary line 100 are the same line or the same group of devices which transmit virtual boundary signals. That is to say, the intelligent mower cannot distinguish the first boundary line from the second boundary line through its own signal sensor.

It is to be noted that as shown in FIG. 1, although the first boundary line 100 and the second boundary line 200 are the same line, two boundary lines 100A of a portion extending from the first boundary line 100 into the working region 300 are very close to each other or intersect with each other, which may cause signals of the two boundary lines 100A to disappear or be weakened and fail to be detected by a sensor of the intelligent mower. Thus, an island surrounded by the second boundary line 200, that is, the non-working region 400, is formed. It is to be understood that the non-working region is located in the working region, the second boundary line 200 may be considered as an island line, and an obstacle (for example, a pool and a flower bed) defined by the second boundary line 200 may be considered as the island in the working region.

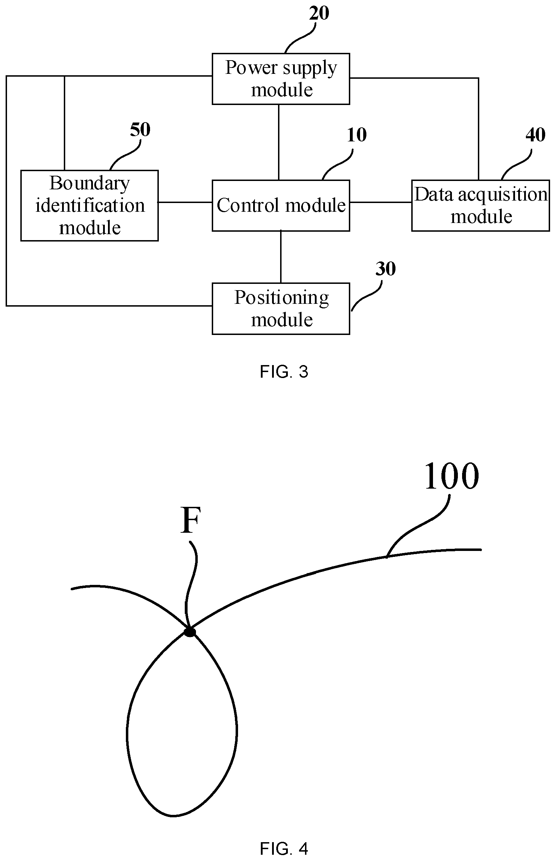

As shown in FIGS. 2 and 3, the intelligent mowing device 500 includes at least a housing 501, a cutting blade 502 disposed below the body of the mower, drive wheels 503, a drive motor (not shown) for controlling the drive wheels 503 to walk, a control module 10, a power supply device 20, a positioning module 30, and a data acquisition module 40. It is to be understood that the mower 500 also includes a cutting motor (not shown) for driving the cutting blade 502. The control module 10 controls the drive motor and the cutting motor so as to control the drive wheels 503 and the cutting blade 502, respectively. The cutting blade is used for mowing grass and has a mowing radius R. As shown in FIG. 1, when the mower 500 walks along the first boundary line 100, the closed region surrounded by a dashed line 700 is the maximum range of the working region 300, where the distance between the dashed line 700 and the first boundary line 100 is the mowing radius R.

The power supply device 20 is configured to supply power to the drive motor and the cutting motor and supply a supply voltage to each of unit modules such as the control module 10, the positioning module 30, and the data acquisition module 40. For example, the power supply device may be alternating current mains or a battery pack which is a direct current power supply, which is not limited here.

The positioning module 30 is configured to position position information of the intelligent mower 500 in real time. In the examples of the present application, the positioning module may position the mower using one or more of the Global Positioning System (GPS) positioning technology, the simultaneous localization and mapping (SLAM) positioning technology, the visual positioning technology, the ultrasonic positioning technology, and the like.

The data acquisition module 40 may acquire regional data about a preset range from a current position of the intelligent mower 500, where the preset range is greater than or equal to zero. That is to say, the data acquisition module 40 may acquire the regional data of the mower at the current position or the regional data of the mower in a certain range from the current position. The so-called regional data refers to some data related to only the position of the mower and unrelated to running data (for example, a walking speed, time, or a steering angle) of the mower, for example, the position information of the mower, walk track information, information about a map grid where the mower is located, or information about a map grid around the mower. In this example, the data acquisition module 40 may record or mark the regional data in real time or at a certain frequency.

The control module 10 is configured to control the intelligent mower to walk according to different running modes. For example, the intelligent mower 500 may have the working mode in which the intelligent mower 500 moves and mows the grass in the working region 300, the working mode in which the intelligent mower 500 walks along a boundary line, or other working modes. The boundary line includes a first boundary line 100 or a second boundary line 200. In general, in the process where the mower 500 moves and mows the grass in the working region 300, if the mower 500 has relatively low power and needs to be charged, the mower 500 intelligently looks for a charging station so as to be automatically charged. Typically, the charging station is disposed on the boundary of the working region. For example, the charging station is disposed on the first boundary line 100. Therefore, to find the charging station to be charged, according to a control manner in the related art, the mower is controlled to look for the boundary line and then is controlled to walk along the boundary line until the charging station is found. Since the second boundary line surrounding the obstacle and the first boundary line defining the working region are the same line, it is difficult for the mower to distinguish between the first boundary line and the second boundary line without the help of other hardware. As a result, when looking for the boundary line from any position in the working region, the mower regards the second boundary line as the first boundary line and walks along the second boundary line.

It is to be noted that the examples of the present application are mainly applied in the application scenario where the mower needs to walk along the first boundary line. In the preceding scenario, it can be ensured that the mower can accurately identify the first boundary line and the second boundary line without the help of the other hardware. Thus, the mower is prevented from walking along the second boundary line to start circling ceaselessly and exhausting the power.

The boundary line identification module 50 may identify the boundary line including the first boundary line or the second boundary line. However, a boundary identification module 50 can only identify the boundary line but cannot identify the type of the boundary line, that is, the boundary line identification module 50 cannot determine whether the boundary line is the first boundary line or the second boundary line. In an example, the boundary line identification module 50 may be a sensor capable of identifying the boundary line, such as an electromagnetic sensor.

In an example, when the mower needs to walk along the first boundary line, the mower identifies the boundary line with the boundary line identification module 50, the control module controls the drive motor to drive drive wheels to move from the current position to the boundary line, and then mower walks along the boundary line. The boundary line here may be the first boundary line or the second boundary line. In the examples of the present application, the mode in which the mower walks along the boundary line after finding the boundary line is defined as a boundary walk mode in which the mower walks along the first boundary line or the second boundary line. That is to say, after the boundary line identification module 50 identifies the boundary line, the control module 10 controls the mower to enter the boundary walk mode.

When the mower works in the boundary walk mode, the control module 10 may acquire the regional data of the mower at the current position or the regional data of the mower in the certain range from the current position. For example, the control module 10 may control, according to the relationship between the regional data and a preset data threshold, the mower to walk along the first boundary line. For example, when the regional data is in a data threshold range, it may be determined that the mower is walking along the first boundary line, and the control module only needs to continue controlling the mower to walk along the boundary line. If the preceding regional data exceeds the data threshold range, it may be determined that the mower is walking along the second boundary line, and the control module 10 may control the mower to change a running direction, continue looking for the boundary line, and repeat the comparison of the regional data with the data threshold. The boundary line on which the mower is currently located is identified according to a comparison result until it is determined that the mower walks on the first boundary line. For example, the control module 10 may control the mower to travel out of the second boundary line for a distance, and the boundary line identification module 50 identifies the boundary line again so that the control module 10 may enter the boundary walk mode again according to the identification result and then repeat the process where the regional data and the threshold are compared with each other and the two boundary lines are identified according to the comparison result until it is determined that the mower walks on the first boundary line.

In an example, the control module 10 may control, through random steering control or steering control according to a certain yaw angle, a certain steering angle, or the like, the mower to steer from the second boundary line and look for the boundary line again, which is not limited here.

In an example, during a movement along the boundary line, the intelligent mower can acquire the regional data about the current position of the mower or the regional data about the periphery of the mower using positioning information. The type of a boundary line which the mower is along currently can be accurately determined according to the acquired regional data. Thus, without the help of other hardware facilities, the mower can be accurately controlled to walk along the first boundary line of the running region.

In an example, the preceding regional data refers to information about the current position of the mower on the boundary line. The process in which the intelligent mower is controlled to walk along the first boundary line is described below through the example in which the mower looks for the charging station or another target on the first boundary line.

In a working process of the intelligent mower, when a power detection unit detects relatively low power, the control module may automatically return to the charging station to be charged, and the mower may be located at any position in the working region before returning to the charging station. In an implementation, the control module 10 may control the boundary identification module 50 to identify the first boundary line 100 or the second boundary line 200 before controlling the mower to look for the charging station or another target along the first boundary line. The boundary identification module 50 may identify a boundary line in a current running direction according to a current pose of the mower. Further, the control module 10 controls the mower to walk toward the boundary line identified by the boundary identification module and controls the mower to walk along the boundary line, that is, the control module controls the mower to enter the boundary walk mode. In the boundary walk mode, the data acquisition module 40 may record current boundary position information of the mower and transmit the current boundary position information to a control unit 10, and the control unit 10 determines, by calculating the number of repetition times of any boundary position information at different moments and comparing the number of repetition times with a threshold of the number of times, whether the mower is currently walking on the first boundary line. For example, a position A is counted as an initial position, the position A is repeatedly detected once after a period of time, that is, the number of repetition times the position A is 1, and it may be determined that the mower may circle on the island line, that is, the second boundary line. For example, the threshold of the number of times is a positive integer greater than or equal to 1. For example, the threshold of the number of times is 1, 2, 3, or 4. When the number of repetition times is greater than or equal to the threshold of the number of times, it may be determined that the mower is walking along the second boundary line. When the number of repetition times is less than the threshold of the number of times, it may be determined that the mower is walking along the first boundary line.

If it is determined that the mower is walking along the first boundary line, the control module 10 only needs to continue controlling the mower to walk along the first boundary line. If it is determined that the mower is walking along the second boundary line, the control module 10 may control the mower to travel out of the second boundary line for the distance, then the boundary identification module 50 may be controlled again to look for the boundary line again, and the preceding process is repeated until it is determined that the mower is walking on the first boundary line.

In an example, when the mower encounters the charging station or another target disposed on the first boundary line in the boundary walk mode, the control module 10 may control the mower to stop walking to be charged or perform other operation.

In this example, the number of repetition times of the position of the mower on the boundary line is compared so that it can be determined whether the mower is circling around the island line and the island line can be accurately and efficiently identified without the help of external devices.

In another example, the process where the intelligent mower is controlled to walk along the first boundary line is similar to the control process in the preceding example, and the difference lies in a manner in which the control module identifies the island line, that is, the second boundary line.

In this example, for the process before the control module 10 identifies the island line, reference may be made to the description in the preceding example. Here, the manner in which the control module 10 identifies the island line is mainly introduced.

It is to be noted that a misidentification may exist when the island line is determined based on the number of repetition times of the position as described above. For a first boundary line shown in FIG. 4, the mower may pass a position F twice even if the mower walks on the first boundary line. Therefore, in this example, the control module 10 adopts a determination method which avoids the misidentification. After receiving the boundary position information of the mower transmitted by the data acquisition module 40, the control module 10 may generate walk track data of the mower for any time period based on the boundary position information. For example, the control module 10 may calculate a data repetition degree of walk tracks in any two time periods which do not have the same moment. The so-called two time periods having different time moments may be two time periods which are connected end to end or two time periods between which a certain time interval exists. For example, the preceding two time periods may or may not have equal length.

In an implementation, the control module 10 may determine, according to the relationship between the preceding data repetition degree and a repetition degree threshold, whether the mower is currently walking on the first boundary line. For example, if a walk track of the mower in a first time period is composed of positions A, B, C, D, E, and F and a walk track of the mower in a second time period is composed of positions C, D, E, F, G, and H, there are the repeated tracks C, D, E, and F in the data of the two walk tracks, that is, the data repetition degree of the two walk tracks is 67%. Thus, it may be determined that the mower may circle on the island line, that is, the second boundary line. For example, the repetition degree threshold is a positive number greater than 0. For example, the repetition degree threshold is 5%, 10%, 20%, or 50%. It is to be understood that when the data repetition degree is higher than or equal to the repetition degree threshold, it may be determined that the mower is walking along the second boundary line, and when the data repetition degree is lower than the repetition degree threshold, it may be determined that the mower is walking along the first boundary line.

If it is determined that the mower is walking along the first boundary line, the control module 10 only needs to continue controlling the mower to walk along the first boundary line. If it is determined that the mower is walking along the second boundary line, the control module 10 may control the mower to travel out of the second boundary line for the distance, then the boundary identification module 50 may be controlled again to look for the boundary line again, and the preceding process is repeated until it is determined that the mower is walking on the first boundary line.

In this example, the repetition degree of the walk tracks of the mower on the boundary line is compared so that it is determined whether the mower is circling around the island line, thereby improving the accuracy with which the island line is determined.

In another example, the process where the intelligent mower is controlled to walk along the first boundary line is similar to the control process in the preceding example, and the difference still lies in a manner in which the control module identifies the island line, that is, the second boundary line.

In an example, if the map of the working region is stored in a storage module in the mower, the control module 10 may determine, based on the map in a more efficient manner, whether the mower walks along the first boundary line in the boundary walk mode. For example, map information is stored in the storage module in the intelligent mower 500. The map information may include a map grid of the working region and a map grid of the first boundary line, where the map grid of the first boundary line is marked as a boundary line grid. That is to say, when the mower works in the boundary walk mode, the boundary line grid may be identified so that it is confirmed whether the mower is currently walking along the first boundary line.

The data acquisition module 40 may acquire information about a first map grid of the current position of the intelligent mower and transmit the information to the control module 10. The control module 10 detects whether the first map grid has boundary line mark information to determine whether the first map grid is the boundary line grid. If it is detected that the first map grid is not the boundary line or the number of first map grids confirmed as boundary line grids within a certain time period is less than or equal to a first number threshold, it is determined that the intelligent mower is walking along the second boundary line. Otherwise, it is determined that the intelligent mower is walking along the first boundary line.

In an implementation, the data acquisition module 40 may acquire second map grids in the preset range from the current position of the intelligent mower. For example, the data acquisition module may acquire map grids in a range of 1 meter from the current position of the intelligent mower. For example, the control module may detect the number of boundary line grids among all the second map grids. If the number of boundary line grids among the second map grids is less than or equal to a second number threshold, it is determined that the intelligent mower is walking along the second boundary line. Otherwise, it may be determined that the mower is walking along the first boundary line. In particular, the control module 10 may set a weight coefficient of the boundary line grid according to the distance between the boundary line grid and the current position of the mower. For example, the weight of a boundary line grid closest to the current position of the mower is 2, and the weight of a boundary grid farther from the mower is 0.5. Therefore, when the number of boundary line grids among the second map grids is calculated, the weight coefficient may be multiplied so that the reliability of island line determination is improved.

If it is determined that the mower is walking along the first boundary line, the control module 10 only needs to continue controlling the mower to walk along the first boundary line. If it is determined that the mower is walking along the second boundary line, the control module 10 may control the mower to travel out of the second boundary line for the distance, then the boundary identification module 50 may be controlled again to look for the boundary line again, and the preceding process is repeated until it is determined that the mower is walking on the first boundary line.

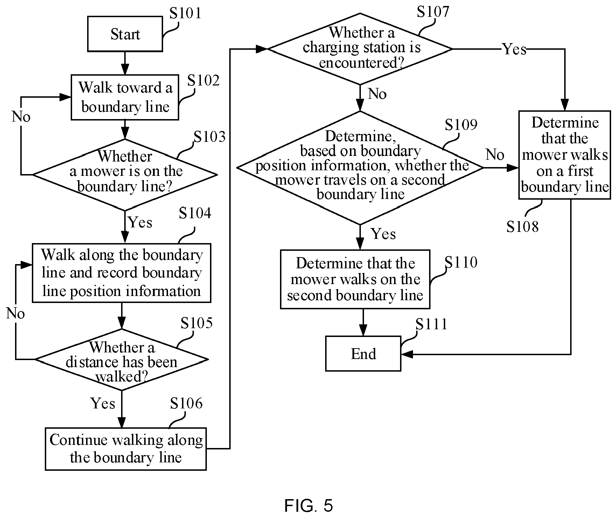

A flowchart of a method for controlling the movement of the intelligent mower is described below in conjunction with FIG. 5, and the method includes the steps described below.

In S101, a flow starts and a boundary line walk mode is triggered. It is to be understood that the mower identifies the boundary line and steers to walk toward the boundary line after the boundary line walk mode is triggered, where the boundary line here includes the first boundary line or the second boundary line.

In S102, a walk toward the boundary line is performed.

In S103, it is detected whether the mower is on the boundary line. If the result of the detection is yes, the flow proceeds to step S104 where a walk along the boundary line is performed and boundary line position information is recorded. Otherwise, the flow returns to step S102, and the walk toward the boundary line is continued.

In S104, the walk along the boundary line is performed and the boundary line position information is recorded.

In S105, it is determined whether a distance has been walked. If yes, the flow proceeds to step S106 where the walk along the boundary line is performed. Otherwise, the flow returns to step S104, and the mower is continuously controlled to walk along the boundary line and the boundary line position information is continuously recorded.

It is to be noted that it is determined whether the mower has walked the distance after the boundary line position information is recorded so that it can be ensured that the mower is walking normally and the island line, that is, the second boundary line is prevented from being determined incorrectly when the mower stops walking due to a fault or for another reason.

In S106, the walk along the boundary line is continued.

In S107, it is determined whether the charging station is encountered. If yes, the flow proceeds to step S108 where it is determined that the mower walks on the first boundary line. Otherwise, the flow proceeds to step S109 where it is determined, based on the boundary position information, whether the mower travels on the second boundary line.

In S108, it is determined that the mower walks on the first boundary line.

In S109, it is determined, based on the boundary position information, whether the mower travels on the second boundary line. If yes, the flow proceeds to step S110 where it is determined that the mower travels on the second boundary line. Otherwise, the flow proceeds to step S108.

For example, the number of repetition times of the boundary position information may be detected or the track data may be generated based on the boundary position information and then the repetition degree of the track data may be detected such that it is determined whether the mower travels on the second boundary line. For a specific determination process, reference may be made to the description in the preceding example. The details are not repeated here.

In S110, it is determined that the mower travels on the second boundary line.

In S111, the flow ends.

It is to be noted that the preceding control flow is only the method with which the mower determines, in the boundary walk mode, the type of the boundary line along which the mower is walking currently. For the steering control after the mower is identified to walk on the second boundary line, reference may be made to the description in the preceding example. The details are not repeated here.

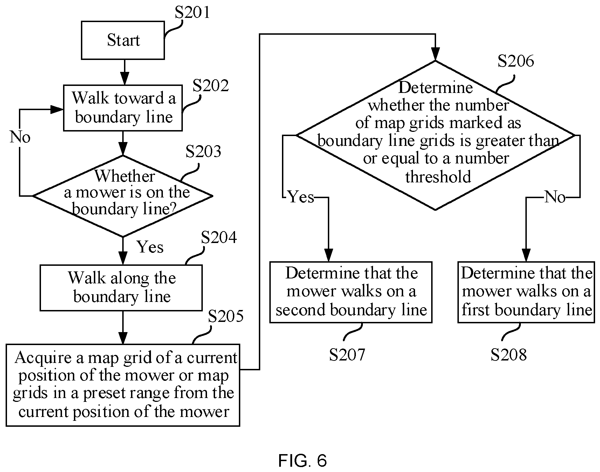

A flowchart of a method for controlling the movement of the intelligent mower is described below in conjunction with FIG. 6, and the method includes the steps described below.

In S201, a flow starts and the boundary line walk mode is triggered. It is to be understood that the mower identifies the boundary line and steers to walk toward the boundary line after the boundary line walk mode is triggered, where the boundary line here includes the first boundary line or the second boundary line.

In S202, the walk toward the boundary line is performed.

In S203, it is detected whether the mower is on the boundary line. If the result of the detection is yes, the flow proceeds to step S204 where the walk along the boundary line is performed. Otherwise, the flow returns to step S202, and the walk toward the boundary is continued.

In S204, the walk along the boundary line is performed.

In S205, the map grid of the current position of the mower or the map grids in the preset range from the current position of the mower are acquired.

In S206, it is determined whether the number of map grids marked as the boundary line grids is greater than or equal to a number threshold. If yes, the flow proceeds to step S207 where it is determined that the mower travels on the second boundary line. Otherwise, the flow proceeds to step S208 where it is determined that the mower travels on the first boundary line.

It is to be understood that for the method with which the mower determines the island line, that is, the second boundary line according to the information about the map grid, reference may be made to the description in the preceding example. The details are not repeated here.

In S207, it is determined that the mower travels on the second boundary line.

In S208, it is determined that the mower travels on the first boundary line.

In S209, the flow ends.

The preceding control flow is only the method with which the mower determines, in the boundary walk mode, the type of the boundary line along which the mower is walking currently. For the steering control after the mower is identified to walk on the second boundary line, reference may be made to the description in the preceding example. The details are not repeated here.

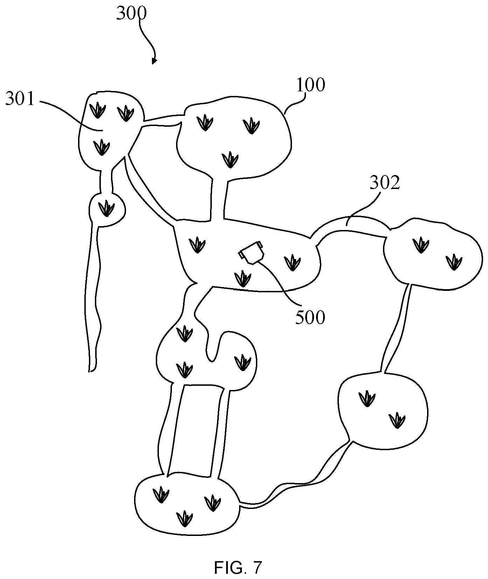

In another example, as shown in FIG. 7, the working region 300 enclosed by the first boundary line 100 may include multiple sub-working regions 301 and multiple region connection channels 302, where a region connection channel 302 connects different sub-working regions 301. Typically, the region connection channel 302 is relatively narrow. With its width, the region connection channel 302 can allow only the mower to pass through it. For example, the width may be 0.5 meters, 1 meter, or 2 meters. The length of the region connection channel 302 is related to the distance between the two sub-working regions 301 connected by the region connection channel 302.

In this example, a map building module 60 is further included. The map building module 60 can build a regional map of the working region 300. In general, the control module 10 may control, according to features of different sub-working regions or features of different region connection channels (for example, a serial number of a sub-region, a serial number of a channel, or a boundary feature of the working region) inputted by a user, the mower 500 to pass through a region connection channel to move and mow the grass in a different sub-region. However, this method with which relevant features of the working region are identified based on the operation of the user and the mower is controlled to work has unstable accuracy and may have a negative impact on the mower. For example, if the entrance of the region connection channel inputted by the user has a deviation, the mower may enter the non-working region by mistake when entering the narrow channel through the entrance. If there is an obstacle in the non-working region, the mower may be damaged.

This example is directed to the working region having the multiple sub-working regions and the narrow region connection channels, where the mower automatically identifies the features of the regional map to complete moving and mowing the grass in the working region.

In an implementation, a map acquisition unit 101 in the control module 10 may acquire the preceding regional map and transmit the map data to a data processing unit 102. The data processing unit 102 performs image processing on the regional map to identify a sub-working region and a region connection channel in the regional map and generate a topological structure of the regional map. Further, a control unit 103 may control, according to the topological structure of the regional map, the mower 500 to pass through the region connection channel 400 to move and mow the grass in a different sub-working region.

In an example, the process where the regional map is processed by the data processing unit 102 is described below.

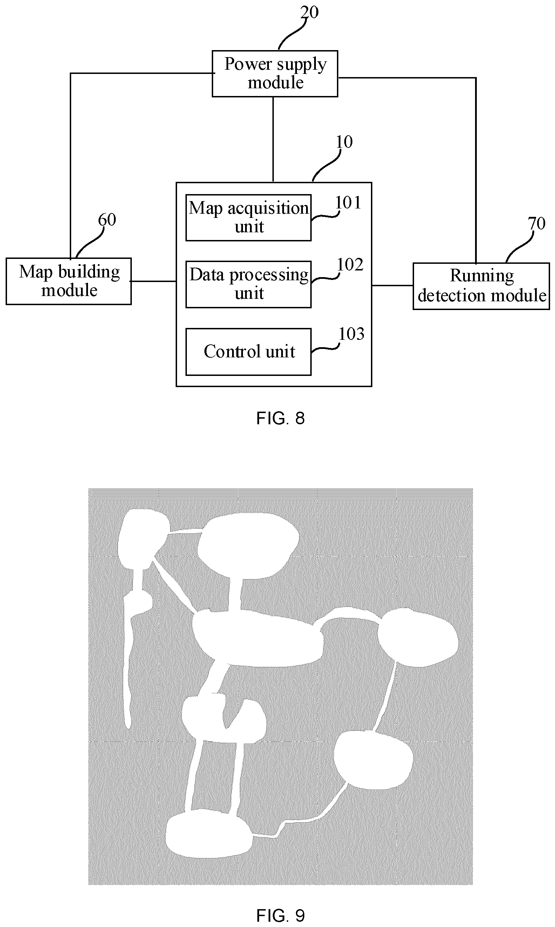

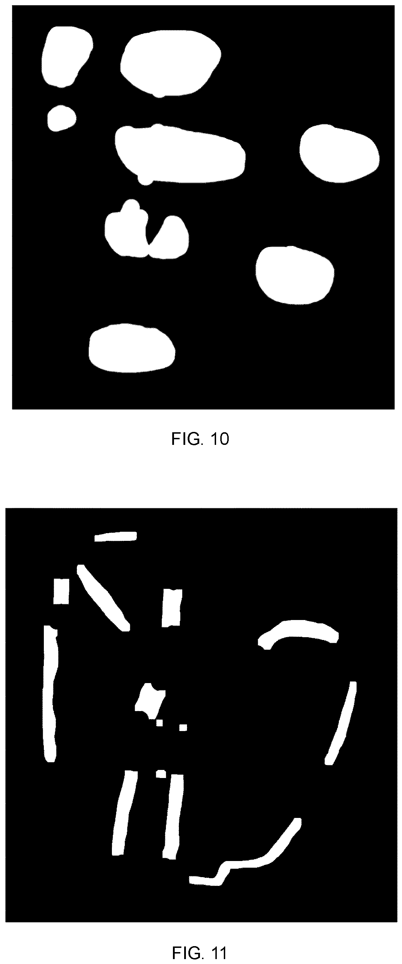

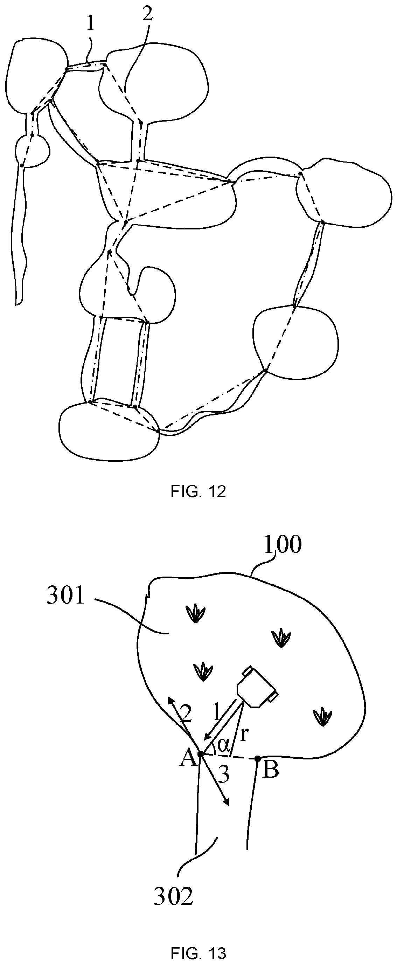

The data processing unit 102 may include a region division subunit 1021, an entrance/exit extraction subunit 1022, a relationship extraction subunit 1023, and a topology generation subunit 1024. The data processing unit 102 may perform image graying processing on the regional map to obtain a grayscale image as shown in FIG. 9. For example, for a grayscale image of the working region, the region division subunit 1021 may first extract features of the sub-working region to obtain a grayscale image of the sub-working region shown in FIG. 10, where the features of the sub-working region may include features such as the area, outline, or central position of the region. In an example, a method for extracting the features of the sub-working region may be to perform closing operation and then to perform opening operation so as to extract and record the boundary of the sub-working region. The so-called closing operation may be to perform dilation and then to perform erosion to perform circle shrinkage gradually so that a relatively large sub-working region in the working region is extracted. For example, in addition, the region division subunit 1021 may also allocate a unique region identifier, such as a sub-region ID, to the sub-working region. Similarly, the region division subunit 1021 may extract features of the region connection channel after extracting the features of the sub-working region. Similarly, the features of the region connection channel may include the length, width, outline, and the like of the channel. In an example, the region division subunit 1021 may compare the original grayscale image with the grayscale image of the sub-working region, that is, FIG. 9 and FIG. 10 and then extract the difference between FIG. 9 and FIG. 10 to obtain the grayscale image of the region connection channel, as shown in FIG. 11. It is to be understood that the region division subunit 1021 may also extract and record the boundary line of the region connection channel and allocate a unique channel identifier, such as a channel ID, to the region connection channel. In an example, the relationship extraction subunit 1023 may record the connection relationship between different entrances/exits connected to the same sub-working region. For example, the entrance/exit of each region connection channel and each sub-working region are tested so that a sub-working region corresponding to the entrance/exit is determined and then the connection relationship between the entrance/exits of the same sub-working region is recorded. In an example, the topology generation subunit 1024 may generate the topological structure of the working region based on the features of the sub-working region, the features of the region connection channel, and the connection relationship between the entrance/exits and the sub-working region described above. In an example, the preceding topological structure is shown in FIG. 12, where the two endpoints of a dashed line 1 are located in two different sub-working regions and the two endpoints of a dashed line 2 are located in the same sub-working region, and the dashed line 1 is a topological line of the region connection channel and the dashed line 2 is a topological line of the sub-working region.

The preceding manner in which the data processing unit is divided into four subunits is not unique. When a different data processing method is used for identifying the relevant features in the working region, different subunit division may be performed on the data processing unit.

In the example of the present application, the features of the sub-working region and the narrow region connection channel in the working region are automatically extracted and identified through the regional map so that the accuracy is ensured with which the mower is controlled to move and mow the grass in the different sub-region.

In an example, the data processing unit 102 may identify the sub-working region and the region connection channel in the working region with other image processing methods so that the control unit 103 can control, according to an identification result, the mower to pass through the region connection channel to move and mow the grass in the different sub-working region.

In an example, the intelligent mowing device 500 may further include a running detection module 70. The running detection module 70 may acquire pose information of the mower during the walk of the mower 500, where the pose information may include information such as the movement direction, position, and pose of the mower. During the movement of the mower, the control unit 10 may detect the position information of the mower in real time based on the positioning module and determine, in conjunction with the preceding topological structure and the position information of the mower, whether the mower runs to a region in the range of a certain distance from the entrance/exit, that is, the control unit 10 may detect in real time whether the mower walks to the vicinity of the entrance/exit of the narrow channel. For example, when it is detected that the mower walks to the vicinity of the entrance/exit, the control unit 103 may determine, according to the preceding pose information, whether the running direction of the intelligent mowing device is toward the entrance/exit. That is to say, when the mower walks to the vicinity of the entrance/exit, it is necessary to determine whether the mower is about to enter the narrow region connection channel so as to mow the grass in the other sub-working region connected to the channel. It is to be understood that when it is determined that the running direction of the mower is toward the entrance/exit, the mower may be considered to be about to enter the region connection channel corresponding to the entrance/exit so that the control unit may control the mower to pass through the region connection channel along the boundary line.

In an implementation, as shown in FIG. 13, assuming that the entrance/exit has two topological nodes A and B, the center of the two nodes is a point C, and the mower runs in a certain range (the distance of a radius r) from the central point C (not shown), an included angle α between the running direction of the mower and a line AB is calculated and when a is in a certain threshold range, it is confirmed that the running direction of the mower is toward the entrance/exit.

Referring to FIG. 13, when the mower is controlled to pass through the region connection channel along the boundary line, the mower needs to be controlled to move to the boundary line 100, for example, the mower moves to the boundary line along the direction indicated by an arrow 1, and then the mower is controlled to walk along the boundary line. In this process, the direction in which the mower walks along the boundary line may be a direction away from the entrance/exit of the channel, for example, the direction indicated by an arrow 2 or may be a direction toward the entrance/exit of the channel, for example, the direction indicated by an arrow 3. Therefore, to prevent the mower from being away from the entrance/exit, the control unit may detect signal strength of the boundary line and control, according to the relationship between the signal strength and a strength threshold, the direction in which the mower moves along the boundary line. For example, when the detected signal strength is greater than the strength threshold, it may be determined that the mower is entering the region connection channel along the boundary line, and in this case, the control unit only needs to control the mower to continue walking along the boundary line in a current walk direction to pass through the region connection channel; if it is detected that the signal strength is less than the strength threshold, it is determined that the mower is walking away from the region connection channel along the boundary line, and in this case, the control unit controls the intelligent mowing device to reverse a direction to walk along the boundary line along the direction opposite to the current running direction so as to pass through the region connection channel.

It is to be understood that the mower may not run normally due to an unknown obstacle in the non-working region outside the boundary line or for another reason when passing through the region connection channel along the boundary line. For example, in the process where the mower is controlled to pass through the region connection channel along the boundary line, the control unit may control the mower to steer to the middle position of the channel for travel, where the middle position of the channel refers to the middle position of the two boundary lines forming the region connection channel.

It is to be noted that the width of the region connection channel is different and the signal strength in the channel is also different. When the width of the channel is relatively narrow, the signal strength in the channel may be considered to be the same within a certain range of error. When the width of the channel is greater than a certain value, the signal strength in the middle of the channel is relatively weak and the signal strength on the two sides of the channel is relatively strong so that a signal space with weak signals in the middle and strong signals on the two sides is formed. During the travel of the mower in the channel, the control unit may acquire signal strength on the left side of the mower and signal strength on the right side of the mower separately and then control, according to the signal strength on the left side and the signal strength on the right side, the mower to travel at the middle position of the channel so that the ratio of the signal strength on the left side of a machine body to the signal strength on the right side of the machine body is in a preset ratio range, where the preset ratio range may refer to any number from 0.5 to 1.5, for example, 0.6, 0.8, 1, 1.2, or 1.3. For example, when the mower travels in a first direction in the channel, the control unit detects that a signal on the left side of the machine body is relatively weak, a signal on the right side of the machine body is relatively strong, and the ratio of the signal strength on the left side to the signal strength on the right side is 0.2, it may be determined that the mower is relatively far from a left boundary line. In this case, the control unit controls the mower to steer leftward and move a certain distance toward the left boundary line until the ratio of the signal strength on the left side to the signal strength on the right side is in the preset ratio range. Then, the mower is controlled to steer back to the first direction to continue traveling. The first direction refers to the direction in which the mower travels away from the region connection channel, which may be considered to coincide with the direction from the entrance of the channel to the exit of the channel.

For example, during the travel of the mower in the channel, it may be determined that the mower has traveled out of the channel and traveled into the sub-working region connected to the channel when the control unit detects that the signal strength is less than the strength threshold. It is to be noted that the mower walks and mows the grass in the sub-working region after traveling into the sub-working region and a specific walk control manner is not limited here.

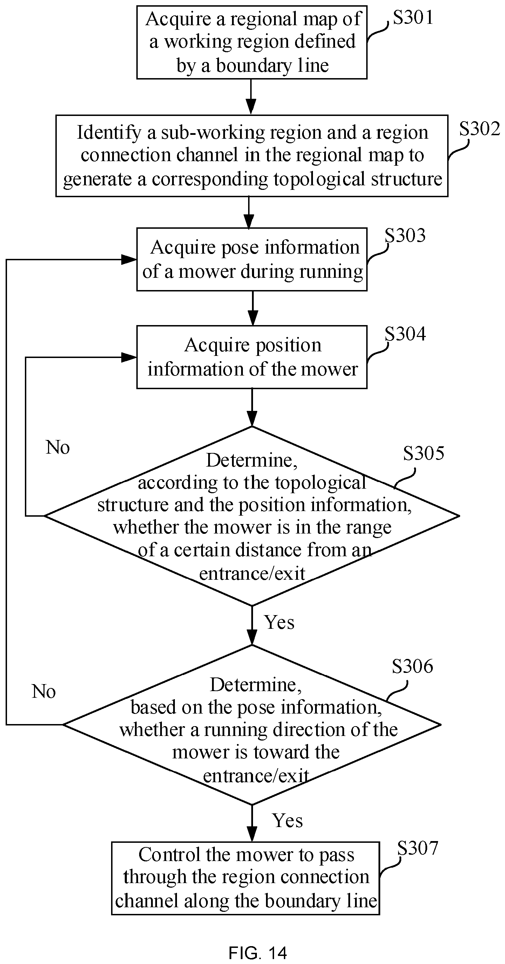

A flowchart of a method for controlling the movement of the intelligent mower is described below in conjunction with FIG. 14, and the method includes the steps described below.

In S301, the regional map of the working region defined by the boundary line is acquired.

In S302, the sub-working region and the region connection channel in the regional map are identified so that the corresponding topological structure is generated.

In S303, the pose information of the mower during running is acquired.

In S304, the position information of the mower is acquired.

In S305, it is determined, according to the topological structure and the position information, whether the mower is in the range of the certain distance from the entrance/exit. If yes, a flow proceeds to step S306. Otherwise, the flow returns to step S304.

In S306, it is determined, based on the pose information, whether the running direction of the mower is toward the entrance/exit. If yes, the flow proceeds to step S307. Otherwise, the flow returns to step S303, and the pose information of the mower is acquired continuously.

In S307, the mower is controlled to pass through the region connection channel along the boundary line.

It is to be noted that in the process where the mower passes through the region connection channel along the boundary line, the mower may be controlled, according to the detected signal strength of the boundary line, to travel at the middle position of the channel. For details, reference may be made to the description in the preceding example. The details are not repeated here.

In another example, an information collection module 90 in the example of the present application includes a boundary identification unit 901 and a positioning unit 902. The boundary identification unit 901 is configured to identify a set boundary 100 and feed back a result, that is, a current boundary position, to the control module 10. The positioning unit 902 acquires position information of the mower on the set boundary and transmits the position information to a storage unit 101. During travel, the positioning unit 902 also acquires real-time pose information of the mower at any position, transmits the real-time pose information to the storage unit 101, stores the real-time pose information in the storage unit 101, and obtains a movement path of the mower by analyzing and processing the real-time pose information. It is to be understood that the storage unit 101 is divided into different storage regions to store different data. The storage unit 101 may also store position information of an obstacle in a region where the running has been performed and a regional map of a completed region where the running has been performed.

In the example of the present application, the process is described below where the control module 10 controls the mower to run.

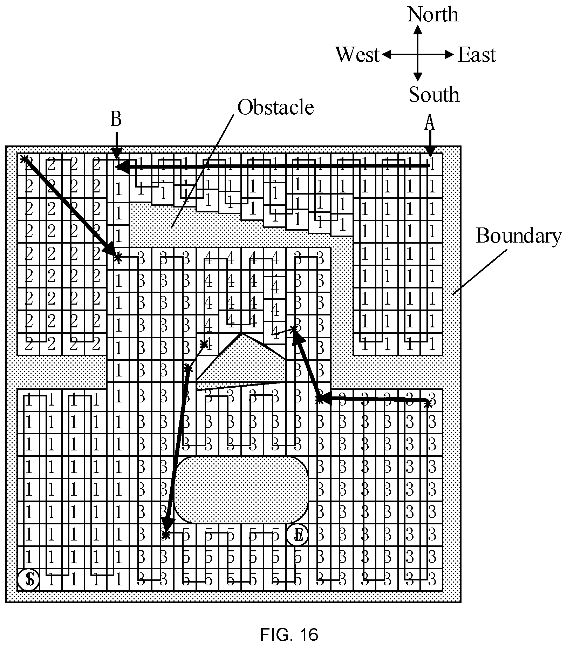

The control module 10 can acquire the running direction of the mower 500, where the running direction may refer to a direction in which the mower 500 is running or a direction in which the mower 500 at an initial running position S shown in FIG. 16 is about to run.

To adaptively adjust a mowing path of the mower during the running, the control module 10 plans the mowing path in the adaptive path planning manner described below.

In this example, the control module 10 may detect a path condition in a set direction of the mower 500 at the current position and then control the rotation direction or the running direction of the drive wheels 201 according to the path condition. When the self-walking mower 500 is at any position, the self-walking mower 500 always corresponds to the same set running direction. For example, one or more set running directions may be provided. When multiple set running directions are provided, a preset selection sequence exists accordingly. That is to say, the control module 10 may sequentially use the multiple set running directions as to-be-selected running directions of the mower at the current position. In an example, the set running direction is the north in a world coordinate system. That is to say, regardless of the position where the mower 500 is located currently, it is first detected whether a northern path is feasible. In an example, the set running directions are the north and the south in the world coordinate system. That is to say, regardless of the position where the mower 500 is located currently, it is first detected whether the northern path is feasible, and it is detected whether a southern path is feasible when the northern path is blocked.

The control module 10 in this example may also include the data processing unit 102 and the control unit 103. It has been already known that the storage unit 102 is configured to store a virtual map and the regional map, where the virtual map and the regional map are each rasterized data. The virtual map includes feasible grids of all regions where the running may be performed among map grids, obstacle grids of the obstacle, and boundary grids where the set boundary is located. The regional map includes historical grids of all regions where the running has been performed. The data processing unit 102 may mark the historical grids in the virtual map and generate a historical track list corresponding to the historical grids. The control module 10 may determine, according to the positioning result fed back by the positioning unit 902, obstacle information stored in the storage unit 101, and the regional map, whether the mower runs to a blind-spot position. It is to be understood that the so-called blind-spot position refers to a position whose surrounding region is the completed region where the running has been performed, the set boundary, or the obstacle. As shown in FIG. 16, when the mower is at the position A, A is surrounded by the boundary and the region where the running has been performed separately, and A is the blind-spot position. In the present application, the storage unit 101 also stores the historical track list corresponding to the historical grids. It is to be understood that the historical track list includes information about all feasible grids where a mowing task has been completed.

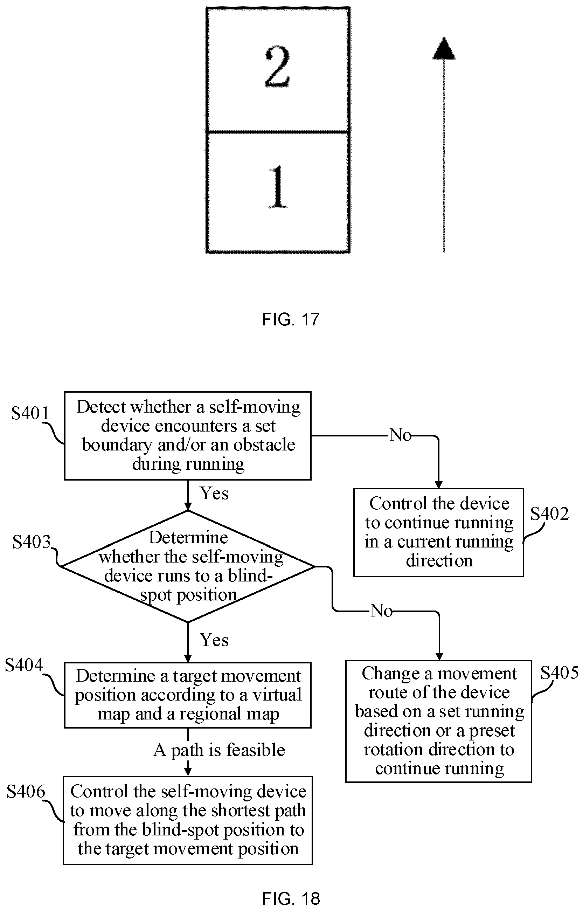

Based on the preceding information, it is to be understood that the path condition includes the condition where a path is feasible and the condition where a path is blocked. The condition where the path is feasible refers to that an adjacent grid in the set running direction on the map corresponding to the current position is a feasible grid where the mowing task is not completed. Similarly, the condition where the path is blocked refers to that the preceding adjacent grid is an unfeasible grid, that is, the boundary grid, an obstacle grid, and a grid where the running has been performed. As shown in FIG. 17, the current position of the mower corresponds to a map grid 1, the direction indicated by an arrow is the set running direction for the position, and the grid type of a grid 2 adjacent to the grid 1 determines the path state of the mower in the direction indicated by the arrow.

In an example, the set running directions of the mower at the current position include a first direction and a second direction. That is to say, when the control module 10 detects that the path in the first direction is blocked, the control module 10 may detect whether the path in the second direction is blocked. The current running direction of the mower is acquired only when the paths in the two to-be-selected running directions are each blocked. In an example, the preceding first direction is the north and the preceding second direction is the south. Based on that the preceding two to-be-selected running directions are set, the control module 10 directly controls the drive wheels to run northward when it is detected that the northern path of the mower at the current position is feasible; and the condition of the southern path of the current position is detected when the path in the first direction is blocked, the drive wheels are controlled to run southward when the southern path is feasible, and the current running direction of the mower is acquired when the southern path is blocked. For example, the control module 10 may control the drive wheels to run according to a preset rotation direction corresponding to the current running direction. In an example, if the mower is at the initial position, the preceding current running direction is an initially set running direction, and if the mower is at any position during actual running, the current running direction is the current actual running direction of the mower, that is, the walk direction of the drive wheels. In an example, the preset rotation direction does not include the preceding set running direction. In an example, different current running directions correspond to different preset rotation directions. For example, when the current running direction is the north, the corresponding preset rotation direction is the northeast. For example, multiple preset rotation directions may be provided. For example, when the current running direction is the north, the corresponding preset rotation directions are sequentially the northeast, the east, the southeast, the northwest, the west, and the southwest. That is to say, when the rotation of the drive wheels toward the northeast controlled by the control module 10 is blocked, the preceding directions may be selected sequentially for the drive wheels to rotate toward.

In an example, the current running directions of the mower may be divided into the preceding first direction and other directions except the first direction. If the current running direction is the first direction, the control module 10 controls the mower to run according to a first preset rotation direction. If the current running direction is another direction, the control module 10 controls the mower to run according to a second preset rotation direction. For example, the current running direction is the first direction, that is, the north, and first preset rotation directions for the north are sequentially the northeast, the east, the southeast, the northwest, the west, and the southwest as described above. For example, when the current running direction is another direction, second preset rotation directions may be the southeast, the east, the northeast, the southwest, the west, and the northwest. In an example, the current running directions may also be subdivided, and the preset rotation directions corresponding to the different current running directions may be subdivided, which is not limited here.

In an example, if paths in all the preset rotation directions corresponding to the current running direction of the mower 100 are blocked, that is, the mower has entered a mowing blind spot, each of map grids around the current position of the mower is the unfeasible grid. As shown in FIG. 16, a grid marked with A in the upper right corner of a grid map is surrounded by the boundary grids or grids where the running has been performed, and the mower enters the blind spot when running to the grid A. In this case, the control module 10 may search the historical track list for a target movement position corresponding to a feasible path in at least one direction and control the drive motor to drive the drive wheels to run from the current blind-spot position to the target movement position. In some examples, the target movement position is a map grid which is in the historical track list, corresponds to the feasible path in the at least one direction, and is closest to the blind-spot position. In the grid map shown in FIG. 16, a grid marked with B is the target movement position. It is to be understood that mowing ends if the historical track list has already included all feasible grids.

The process where the mowing path of the mower in the present application is planned and covered is described below in conjunction with FIG. 16.

In FIG. 16, the position S is the grid of the initial position, the mowing finally ends at a position E, all the grids marked with 1 in the figure constitute a historical track formed in one continuous mowing path, and similarly, all the grids marked with 2, 3, 4, and 5 constitute historical tracks formed in the second, third, fourth, and fifth continuous paths. It is to be understood that each map grid where the running has been performed is stored in the historical track list. When the initial position S is used as the current position, the path in the set running direction (the north) of the position is feasible. According to the adaptive adjustment manner of the running path described in the preceding example, the mower may constantly run from the position S to the grid A, and the grid A is counted as the first adjustment position. At the first adjustment position, the control module 10 searches the historical track list, that is, all the grids marked with 1, finds the grid B closest to the first adjustment position A, and uses the grid B as the target movement position. Then, the control module 10 controls the mower to move from A to B at the shortest linear distance. The, the mower mows the grass in the preceding path self-adaptation manner until a path where all the grids are covered shown in FIG. 16 is formed. It is to be understood that the actual running path is S-shaped when the mower does not enter the blind-spot position. Of course, other high-efficiency movement paths are also within the scope of the present application.

In the example of the present application, prior environment information, for example, the virtual map is used as well as the adaptive path adjustment manner so that the planned path with high efficiency, a low repetition degree, and a high coverage rate is obtained in the mowing process of the mower.

A flowchart of a method for controlling the movement of a self-moving device is described below in conjunction with FIG. 18, and the method includes the steps described below.

In S401, it is detected whether the self-moving device encounters the set boundary or the obstacle during the running.

If no, a flow proceeds to step S402. If yes, the flow proceeds to step S403.

In S402, the device is controlled to continue running in the current running direction.

In S403, it is determined whether the self-moving device runs to the blind-spot position.

If no, the flow proceeds to step S404. If yes, the flow proceeds to step S405.

In S404, a movement route of the device is changed based on the set running direction or the preset rotation direction so that the running is continued.

In S405, the target movement position is determined according to the virtual map and the regional map.

In S406, the self-moving device is controlled to move along the shortest path from the blind-spot position to the target movement position.

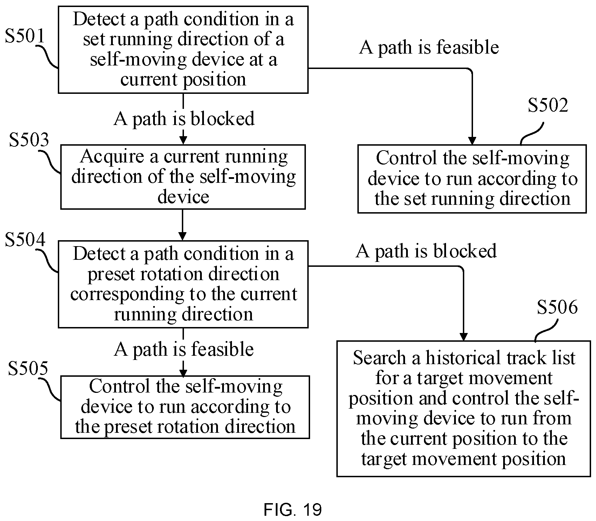

A flowchart of another method for controlling the movement of the self-moving device is described below in conjunction with FIG. 19, and the method includes the steps described below.

In S501, the path condition in the set running direction of the self-moving device at the current position is detected. If the path is feasible, a flow proceeds to step S502. Otherwise, the flow proceeds to step S503.

In S502, the self-moving device is controlled to run according to the set running direction.

In S503, the current running direction of the self-moving device is acquired.

In S504, the path condition in the preset rotation direction corresponding to the current running direction is detected. If the path is feasible, the flow proceeds to step S505. Otherwise, the flow proceeds to step S506.

In S505, the self-moving device is controlled to run according to the preset rotation direction.

In S506, the historical track list is searched for the target movement position, and the self-moving device is controlled to run from the current position to the target movement position.

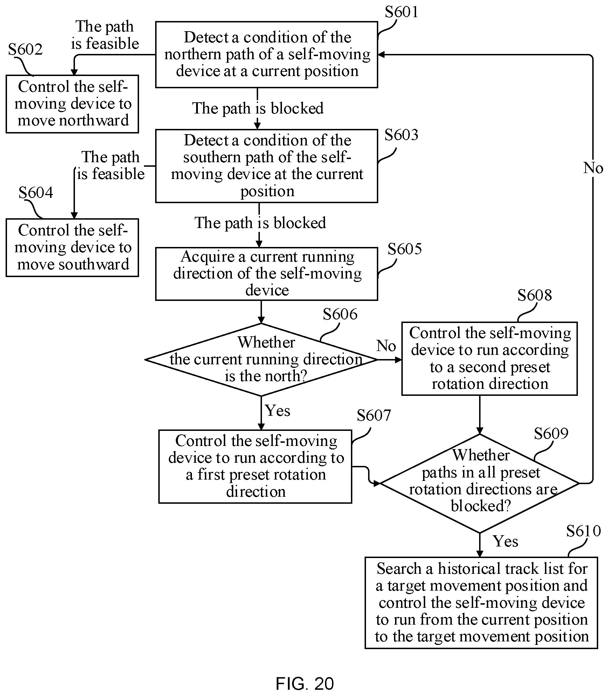

In an example, the to-be-selected running directions include the north and the south. A flow of an adaptive path planning method based on the prior environment information shown in FIG. 20 is described below.

In S601, the condition of the northern path of the self-moving device at the current position is detected. If the path is feasible, a flow proceeds to step S602. Otherwise, the flow proceeds to step S603.

In S602, the self-moving device is controlled to move northward.

In S603, the condition of the southern path of the self-moving device at the current position is detected. If the path is feasible, a flow proceeds to step S604. Otherwise, the flow proceeds to step S605.

In S604, the self-moving device is controlled to move southward.

In S605, the current running direction of the self-moving device is acquired.

In S606, it is determined whether the current running direction is the north. If yes, the flow proceeds to step S607. Otherwise, the flow proceeds to step S608.

In S607, the self-moving device is controlled to run according to the first preset rotation direction.

In S608, the self-moving device is controlled to run according to the second preset rotation direction.

In S609, it is determined whether the paths in all the preset rotation directions are blocked. If yes, the flow proceeds to step S310. Otherwise, the flow proceeds to step S601.

In S610, the historical track list is searched for the target movement position, and the self-moving device is controlled to run from the current position to the target movement position.

## Claims

1. An intelligent mowing system, comprising a working region defined by a first boundary line, a non-working region defined by a second boundary line, and an intelligent mowing device and further comprising:
a control module configured to control the intelligent mowing device to walk in the working region, on the first boundary line, or on the second boundary line;
a positioning module configured to position position information of the intelligent mowing device; and
a data acquisition module configured to acquire regional data about a preset range from a current position of the intelligent mowing device, wherein the preset range is greater than or equal to zero;
wherein the control module is configured to:
acquire the regional data of the intelligent mowing device when the intelligent mowing device works in a boundary walk mode in which a walk along the first boundary line or the second boundary line is performed; and
control, according to a relationship between the regional data and a data threshold, the intelligent mowing device to walk along the first boundary line.

2. The intelligent mowing system according to claim 1, further comprising a boundary line identification module configured to identify the first boundary line or the second boundary line, wherein the control module is configured to control the intelligent mowing device to move to the first boundary line or the second boundary line so as to cause the intelligent mowing device to enter the boundary walk mode.

3. The intelligent mowing system according to claim 2, wherein the control module is configured to: control the intelligent mowing device to be along the first boundary line when the regional data is in a data threshold range; and control the intelligent mowing device to travel out of the second boundary line for a distance when the regional data exceeds the data threshold range; and the boundary line identification module identifies the first boundary line or the second boundary line after the intelligent mowing device travels out of the second boundary line for the distance so that the control module controls, according to an identification result, the mowing device to enter the boundary walk mode.

4. The intelligent mowing system according to claim 1, wherein the working region is a closed region which is formed by the intelligent mowing device by walking along the first boundary line and mowing grass with a mowing radius.

5. The intelligent mowing system according to claim 1, wherein the data acquisition module is configured to record boundary position information of the intelligent mowing device walking along the first boundary line or the second boundary line when the intelligent mowing device works in the boundary walk mode; and the control module is configured to: calculate a number of repetition times of the boundary position information at different moments; determine that the intelligent mowing device is walking along the second boundary line when the number of repetition times is greater than or equal to a threshold of a number of times; and control the intelligent mowing device to move from the second boundary line to the first boundary line and walk along the first boundary line.

6. The intelligent mowing system according to claim 5, wherein the control module is configured to: generate walk track data for any time period based on the boundary position information; calculate a data repetition degree of walk track data in two time periods which do not have a same moment; determine that the intelligent mowing device is walking along the second boundary line when the data repetition degree is greater than or equal to a repetition degree threshold; and control the intelligent mowing device to move from the second boundary line to the first boundary line and walk along the first boundary line.

7. The intelligent mowing system according to claim 1, further comprising a storage module configured to store map grids comprising the working region and the first boundary line, wherein a map grid in which the first boundary line is located is marked as a boundary line grid; the data acquisition module is configured to acquire a first map grid of a current position of the intelligent mowing device when the intelligent mowing device works in the boundary walk mode; and the control module is configured to: detect whether the first map grid is the boundary line grid; determine that the intelligent mowing device is walking along the second boundary line if the first map grid is not the boundary line grid or a number of first map grids confirmed as boundary line grids within a certain time period is less than or equal to a first number threshold; and control the intelligent mowing device to move from the second boundary line to the first boundary line and walk along the first boundary line.

8. The intelligent mowing system according to claim 7, wherein the data acquisition module is configured to acquire second map grids in the preset range from the current position of the intelligent mowing device when the intelligent mowing device works in the boundary walk mode; and the control module is configured to: detect a boundary line grid among the second map grids; determine that the intelligent mowing device is walking along the second boundary line if a number of boundary line grids among the second map grids is less than or equal to a second number threshold; and control the intelligent mowing device to move from the second boundary line to the first boundary line and walk along the first boundary line.

9. The intelligent mowing system according to claim 1, wherein the control module comprises: a map acquisition unit configured to acquire a regional map of the working region; a data processing unit configured to identify a sub-working region and a region connection channel in the regional map and generate a topological structure of the regional map; and a control unit configured to control, according to the topological structure of the regional map, the intelligent mowing device to pass through the region connection channel to move and mow grass in a different sub-working region.

10. The intelligent mowing system according to claim 9, wherein the data processing unit comprises: a region division subunit configured to identify the sub-working region and the region connection channel in the regional map; an entrance/exit extraction subunit configured to extract an entrance/exit node at a joint between the region connection channel and the sub-working region; a relationship extraction subunit recording a connection relationship between different entrance/exit nodes connected to a same sub-working region; and a topology generation subunit configured to generate the topological structure of the regional map based on the sub-working region, the region connection channel, and the connection relationship.

11. The intelligent mowing system according to claim 10, wherein the intelligent mowing device further comprises a running detection module configured to acquire pose information of the intelligent mowing device during running; and the control unit is configured to: acquire the pose information; acquire the position information of the intelligent mowing device; determine, based on the pose information, whether a running direction of the intelligent mowing device is toward an entrance/exit when it is determined, according to the topological structure and the position information, that the intelligent mowing device is in a range of a certain distance from the entrance/exit; and control the intelligent mowing device to pass through the region connection channel along a boundary line to move in the different sub-working region when the intelligent mowing device runs toward the entrance/exit.

12. The intelligent mowing system according to claim 11, wherein the control unit is configured to: detect signal strength of the boundary line during a walk of the intelligent mowing device along the boundary line; control the intelligent mowing device to continue walking along the boundary line in a current walk direction to pass through the region connection channel when the signal strength is greater than a strength threshold; and control the intelligent mowing device to reverse a direction to walk along the boundary line along a direction opposite to a current running direction so as to pass through the region connection channel when the signal strength is less than the strength threshold.

13. The intelligent mowing system according to claim 12, wherein the control unit is configured to control, in a process where the intelligent mowing device passes through the region connection channel along the boundary line, the intelligent mowing device to steer to a middle position of the region connection channel for travel.

14. The intelligent mowing system according to claim 13, wherein the control unit is configured to: acquire signal strength on a left side of the intelligent mowing device and signal strength on a right side of the intelligent mowing device during a walk of the intelligent mowing device along the region connection channel; and control, according to the signal strength on the left side and the signal strength on the right side, the intelligent mowing device to travel at the middle position of the region connection channel so that a ratio of the signal strength on the left side to the signal strength on the right side is in a preset ratio range.

15. The intelligent mowing system according to claim 1, wherein the first boundary line and the second boundary line are a same line.

16. An intelligent mowing device, comprising:
a control module configured to control the intelligent mowing device to walk in a working region defined by a first boundary line, on the first boundary line, or on a second boundary line, wherein the second boundary line defines a non-working region;
a positioning module configured to position position information of the intelligent mowing device; and
a data acquisition module configured to acquire regional data about a preset range from a current position of the intelligent mowing device, wherein the preset range is greater than or equal to zero;
wherein the control module is configured to:
acquire the regional data of the intelligent mowing device when the intelligent mowing device works in a boundary walk mode in which a walk along the first boundary line or the second boundary line is performed; and
control, according to a relationship between the regional data and a data threshold, the intelligent mowing device to walk along the first boundary line; and
the control module comprises:
a map acquisition unit configured to acquire a regional map of the working region;
a data processing unit configured to identify a sub-working region and a region connection channel in the regional map and generate a topological structure of the regional map; and
a control unit configured to control, according to the topological structure of the regional map, the intelligent mowing device to pass through the region connection channel to move and mow grass in a different sub-working region.

17. An intelligent mowing device, comprising:
a control module configured to control the intelligent mowing device to walk in a working region defined by a first boundary line, on the first boundary line, or on a second boundary line, wherein the second boundary line defines a non-working region;
a positioning module configured to position position information of the intelligent mowing device;
a data acquisition module configured to acquire regional data about a preset range from a current position of the intelligent mowing device, wherein the preset range is greater than or equal to zero; and
a boundary line identification module configured to identify the first boundary line or the second boundary line; and
the control module is configured to:
control the intelligent mowing device to move to the first boundary line or the second boundary line so as to cause the intelligent mowing device to enter a boundary walk mode;
acquire the regional data of the intelligent mowing device when the intelligent mowing device works in the boundary walk mode; and
control, according to a relationship between the regional data and a data threshold, the intelligent mowing device to walk along the first boundary line.

18. The intelligent mowing device according to claim 17, wherein the control module is configured to: control the intelligent mowing device to be along the first boundary line when the regional data is in a data threshold range; and control the intelligent mowing device to travel out of the second boundary line for a distance when the regional data exceeds the data threshold range; and the boundary line identification module identifies the first boundary line or the second boundary line after the intelligent mowing device travels out of the second boundary line for the distance so that the control module controls, according to an identification result, the mowing device to enter the boundary walk mode.

19. The intelligent mowing device according to claim 17, wherein the data acquisition module is configured to record boundary position information of the intelligent mowing device walking along the first boundary line or the second boundary line when the intelligent mowing device works in the boundary walk mode; and the control module is configured to: calculate a number of repetition times of the boundary position information at different moments; determine that the intelligent mowing device is walking along the second boundary line when the number of repetition times is greater than or equal to a threshold of a number of times; and control the intelligent mowing device to move from the second boundary line to the first boundary line and walk along the first boundary line.

20. The intelligent mowing device according to claim 19, wherein the control module is configured to: generate walk track data for any time period based on the boundary position information; calculate a data repetition degree of walk track data in two time periods which do not have a same moment; determine that the intelligent mowing device is walking along the second boundary line when the data repetition degree is greater than or equal to a repetition degree threshold; and control the intelligent mowing device to move from the second boundary line to the first boundary line and walk along the first boundary line.
